# EUROPÄISCHE PATENTSCHRIFT

(11) **EP 1 286 325 B1**
(45) Veröffentlichungstag und Bekanntmachung des Hinweises auf die Patenterteilung: **13.10.2004**
(21) Anmeldenummer: 01119493.3
(22) Anmeldetag: 14.08.2001
(51) Int. Cl.: G09F 3/04, G09F 3/00, A01G 23/099

(54) **Signierelement zum Kennzeichen von Holz, insbesondere von Baumstämmen**
Identification marking tag for wood, in particular for tree trunks
Eléments de marquage pour l'identification du bois, en particulier troncs d'arbres

(43) Veröffentlichungstag der Anmeldung: 26.02.2003
(73) Patentinhaber: Latschbacher GmbH, 4484 Kronstorf (AT)
(72) Erfinder: Latschbacher, Klaus, Dipl.-Ing., A-4484 Kronstorf (AT)
(74) Vertreter: Vetter, Hans, Dipl.-Phys. Dr.

(56) Entgegenhaltungen:
- EP-A- 0 248 928
- FR-A- 2 673 026
- GB-A- 2 075 464

## Beschreibung

Die Erfindung betrifft ein Signierelement zum Kennzeichnen von Holz, insbesondere von Baumstämmen, mit einem plättchenartigen, eine Signatur aufweisenden Signierkörper, von dessen einer Flachseite Abnahmehaken zum Einrasten in umfangsseitige Einformungen des Hammerkopfs eines Einschlaghammers zum Einschlagen des Signierelements in Holz hochstehen, und dessen andere Flachseite mit im Holz fixierbaren Einschlagelementen versehen ist.

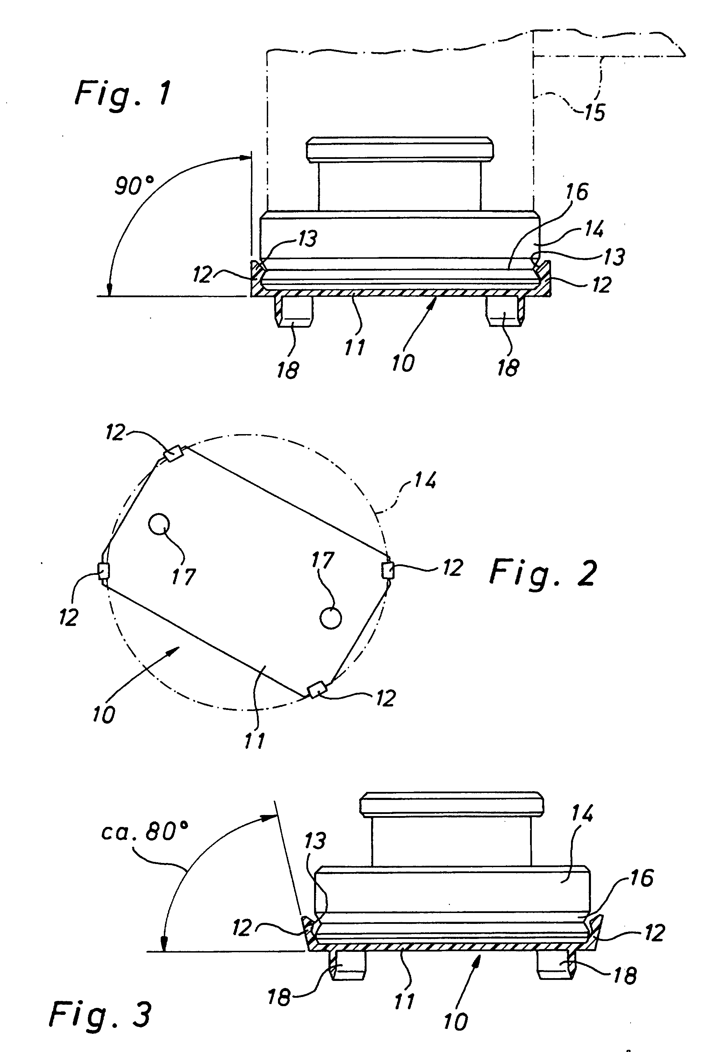

Ein derartiges, üblicherweise aus Kunststoff bestehendes Signierelement ist aus der GB-A- 2075464 bekannt. Das bekannte Signierelement, das im Wesentlichen dem in den Fig. 1 bis 3 der vorliegenden Anmeldung dargestellten Signierelement entspricht, besitzt einen rechteckförmigen plättchenartigen Signierkörper, dessen vier Abnahmehaken zur Verankerung an einem Einschlaghammer an den vier Eckbereichen hochstehen. Diese hochstehenden Abnahmehaken besitzen im oberen freien Endbereich gegeneinander gerichtete Rastvorsprünge, die beim Aufstecken auf den Hammerkopf des Einschlaghammers in eine Umfangsringnut desselben einrasten. Während des Aufsteckvorgangs werden die Abnahmehaken zunächst durch den Hammerkopf elastisch nach außen gebogen, bis diese Vorsprünge einrasten können. Derartige Einschlaghämmer werden von der Anmelderin beispielsweise unter der Bezeichnung 3-027 oder 3-020 angeboten und vertrieben. Zwar sind bei einem Ausführungsbeispiel gemäß Figur 14 die Abnahmehaken an flachen gerundeten Ausbuchtungen des Signierkörpers angeordnet, diese besitzen jedoch hinsichtlich ihrer Breite im Vergleich zu der der Abnahmehaken keine ausreichenden elastischen Eigenschaften um das elastische Ausbiegen der Abnahmehaken nach außen zu mildern.

In der Praxis werden für die verschiedenen Holzarten unterschiedliche Kunststoffmaterialien für die Signierelemente verwendet, beispielsweise Polyamid (PA) für Weichholz, Polykarbonat (PC) für Hartholz und Polyacetal (POM) für solche Hölzer, die für die Papiererzeugung vorgesehen sind, wobei sich das Signierelement während der Papierherstellung auflösen muss. In Abhängigkeit der jeweils verwendeten Kunststoffsorte tritt bei der Fertigung der Signierelemente ein mehr oder weniger großer Verarbeitungsschwund auf, das heißt, die fertigen Signierelemente als Spritzgussteile besitzen voneinander abweichende Größen. Dies wiederum hat zur Folge, dass Signierelemente mit größerem Verarbeitungsschwund nur mit erhöhtem Kraftaufwand auf den Hammerkopf aufgesteckt werden können, wobei durch Kerbspannungbelastung eine große Bruchgefahr für die Abnahmehaken besteht. Eine bekannte Lösung für dieses Problem besteht darin, verschieden große Hammerköpfe für unterschiedlich große Signierelemente zu verwenden. Beispielsweise besitzt der von der Anmelderin hergestellte und vertriebene Einschlaghammer 3-027 zwei verschieden große Hammerköpfe für verschiedene Größen von Signierelementen. Diese Lösung ist jedoch umständlich in der Handhabung und führt zu höheren Kosten, insbesondere dann, wenn eine noch größere Zahl unterschiedlicher Hammerköpfe erforderlich ist. Die andere Möglichkeit, für jede Kunststoffart eine gesonderte Spritzgussform für die Signierelemente zu verwenden, führt ebenfalls zu einem erheblichen Kostenaufwand auch bei der Produktion.

Eine Aufgabe der vorliegenden Erfindung besteht darin, ein Signierelement zu schaffen, das trotz material- und fertigungsbedingt von einer Normgröße abweichenden Abmessungen leicht und ohne Bruchgefahr auf einen einheitlichen Hammerkopf eines Einschlaghammers aufgesteckt werden kann.

Diese Aufgabe wird erfindungsgemäß dadurch gelöst, dass die Abnahmehaken an federzungenartigen Bereichen des plättchenartigen Signierkörpers angeordnet sind, die jeweils durch wenigstens einen vom Randbereich des Signierkörpers aus nach innen verlaufenden Schlitz gebildet sind.

Beim erfindungsgemäßen Signierelement verteilt sich die Verformung beim Aufstecken auf den Hammerkopf auf die Abnahmehaken und die federzungenartigen Bereiche. Dadurch verringert sich die Kerbspannung am Fußpunkt der Abnahmehaken deutlich, was die Bruchgefahr weitgehend verhindert. Durch die Elastizität der federzungenartigen Bereiche können die Abnahmehaken insgesamt wesentlich leichter nach außen gebogen werden, wodurch auch eigentlich zu kleine Signierelemente noch leicht auf den Hammerkopf aufgesteckt werden können, und zwar so leicht, dass sie mit dem Hammerkopf einwandfrei aus einem Magazin entnommen und dann in das jeweilige Holz eingeschlagen werden können. Die federzungenartigen Bereichesind jeweils durch wenigstens einen vom Randbereich des Signierkörpers aus nach innen verlaufenden Schlitz gebildet. Dies hat den Vorteil, dass die herkömmlichen Spritzgussformen nur geringfügig verändert werden müssen und die Gesamtgestalt der Signierelemente im Wesentlichen erhalten bleibt.

Durch die in den Unteransprüchen aufgeführten Maßnahmen sind vorteilhafte Weiterbildungen und Verbesserungen des im Anspruch 1 angegebenen Signierelements möglich.

Die Abnahmehaken sind zweckmäßigerweise an den vier Eckbereichen des rechteckförmigen Signierkörpers angeordnet, das heißt, ihre Position muss gegenüber herkömmlichen Signierelementen nicht verändert werden.

Die federzungenartigen Bereiche sind im unbelasteten Zustand im Wesentlichen rechtwinklig zu den hochstehenden Abnahmehaken angeordnet, wobei dieser rechte Winkel infolge der Elastizität der federzungenartigen Bereiche beim Einsetzen des Hammerkopfes im Wesentlichen erhalten bleibt, im Gegensatz zu den herkömmlichen Signierelementen, bei denen sich dieser Winkel stark verändert und zu Kerbspannungen führt.

Als besonders vorteilhaft hat sich dabei eine Ausführung erwiesen, bei der jeder federzungenartige Bereich durch einen parallel oder beabstandet schräg zur Längsseite des Signierkörpers verlaufenden Schlitz begrenzt ist, der von einer Stirnseite ausgeht. Die Schlitzlänge kann dabei nach Abhängigkeit der gewünschten Elastizität bzw. Biegsamkeit der gebildeten federzungenartigen Bereiche gewählt werden.

Die Signierkörper sind vorzugsweise zusammen mit den Einschlagelementen und/oder den mit Abnahmehaken versehenen federzungenartigen Bereichen einstückig ausgebildet.

Ein Ausführungsbeispiel der Erfindung ist in der Zeichnung dargestellt und in der nachfolgenden Beschreibung näher erläutert. Es zeigen:
- Fig. 1: ein bekanntes, auf einen passenden Hammerkopf aufgestecktes Signierelement im Vertikalschnitt,
- Fig. 2: eine Draufsicht auf dieses Signierelement mit strichpunktiert angedeutetem Hammerkopf,
- Fig. 3: ein ebenfalls bekanntes, jedoch beim Herstellungsprozess stärker geschrumpftes Signierelement, das auf denselben Hammerkopf aufgesteckt ist, in einer Ansicht gemäß Fig. 1,
- Fig. 4: eine Draufsicht auf ein Signierelement als Ausführungsbeispiel der Erfindung,
- Fig. 5: eine Detaildarstellung eines Eckbereichs des in Fig. 4 dargestellten Signierelements,
- Fig. 6: eine Vertikaldarstellung eines derartigen Eckbereichs und
- Fig. 7: das in Fig. 4 dargestellte und auf einen Hammerkopf aufgesteckte Signierelement in einer Anordnung gemäß den Fig. 1 und 3.

Das in den Fig. 1 bis 3 dargestellte bekannte Signierelement 10 ist ein einstückiges Kunststoff-Spritzgussteil und besteht im Wesentlichen aus einem rechteckförmigen, plättchenartigen Signierkörper 11, der an seinen vier abgeschrägten Eckbereichen mit nach einer Seite hin hochstehenden Befestigungshaken versehen ist, die üblicherweise als Abnahmehaken 12 bezeichnet werden. Diese Abnahmehaken 12 weisen an ihren freien Endbereichen gegeneinander, also zur Plättchenmitte hin, weisende Rastvorsprünge 13 auf. Diese Rastvorsprünge greifen beim Aufstecken an einen Hammerkopf 14 eines nur schematisch und strichpunktiert dargestellten Einschlaghammers 15 in eine Umfangsringnut 16 des Hammerkopfs 12 ein und verrasten dadurch. Die Rastvorsprünge 13 und der Querschnitt der entsprechenden Umfangsringnut 16 sind keil- bzw. dreieckartig dargestellt, jedoch sind prinzipiell auch andere Rastformen möglich.

Zwei Durchgangslöcher 17 im Signierkörper 11 dienen zum Auffädeln der Signierelemente auf zwei nicht dargestellte Stäbe eines auch nicht dargestellten Magazins für diese Signierelemente 10. Derartige Magazine, Signierelemente und Einschlaghämmer sind aus Prospekten der Anmelderin bekannt.

An der bezüglich der Abnahmehaken 12 gegenüberliegenden Flachseite des Signierkörpers 11 sind zwei Einschlagelemente 18 einstückig angeformt. Diese können gemäß dem eingangs angegebenen Stand der Technik wellenartig oder plattenartig ausgebildet sein und verjüngen sich an ihrem freien Endbereich schneidenartig zum leichteren Eindringen in das zu signierende Holz. Eine zum Signieren erforderliche Signatur an der den Einschlagelementen 18 gegenüberliegenden Flachseite des Signierkörpers 11 ist zur Vereinfachung nicht dargestellt. Solche Signaturen können aus einer eingeprägten, angeformten oder aufgedruckten Ziffern- oder Buchstabenfolge oder aus einer optischen, magnetischen oder elektromagnetischen Codierung oder aus einem aufgebrachten, z.B. aufgeklebten Label bestehen.

Derartige Signierelemente 10 werden aus dem Magazin dadurch entnommen, dass der Hammerkopf 14 mittels des Einschlaghammers 15 auf das oberste Signierelement so aufgedrückt wird, dass die Abnahmehaken 12 zunächst nach außen gebogen werden und schließlich in die Umfangsringnut 16 einrasten. Nun wird das Signierelement 10 mit einem Hammerschlag gegen das zu signierende Holz bewegt, wobei die Einschlagelemente 18 in das Holz eindringen. Beim Zurückziehen des Einschlaghammers 15 löst sich der Hammerkopf 14 durch Entrastung wieder von den Abnahmehaken 12.

In Fig. 1 ist ein Signierelement 10 dargestellt, das hinsichtlich seiner Abmessungen exakt an den Hammerkopf 14 angepasst ist, das heißt, die hochstehenden Abnahmehaken 12 bilden mit der Ebene des Signierkörpers 11 im eingerasteten (wie in Fig. 1 dargestellt) oder unbelasteten Zustand einen Winkel von 90°.

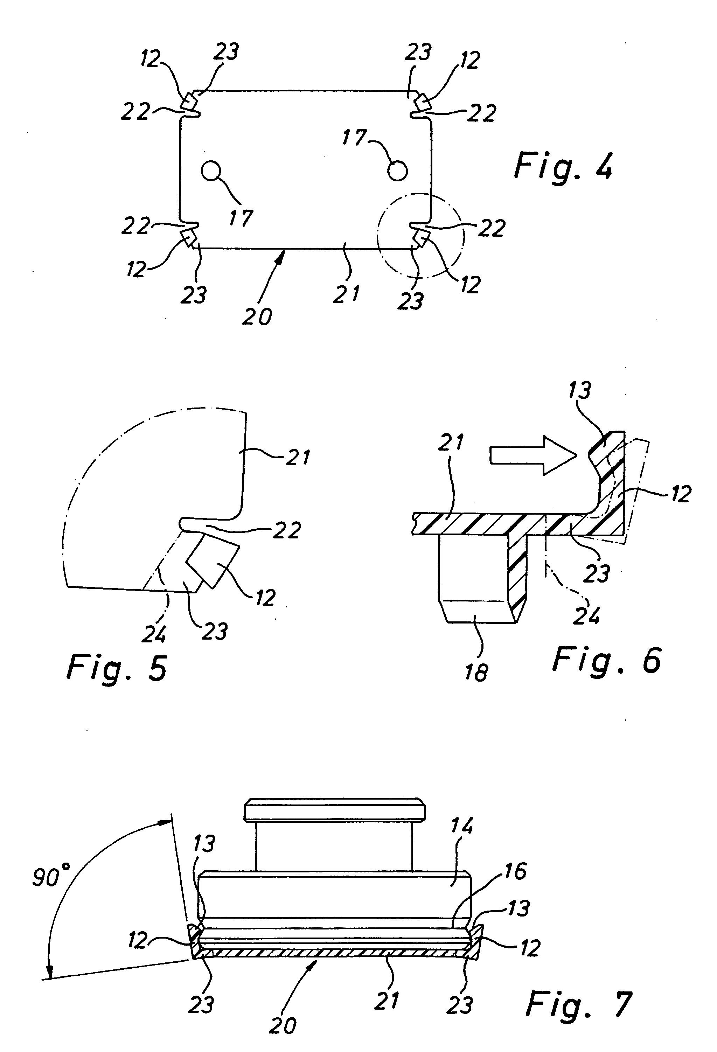

Je nach Holzart und Verwendung werden jedoch unterschiedliche Kunststoffmaterialien zur Herstellung der Signierelemente 10 verwendet, beispielsweise Polyamid (PA) für Weichholz, Polykarbonat (PC) für Hartholz und Polyacetal (POM) für solche Hölzer, die für die Papiererzeugung vorgesehen sind. Das Kunststoffmaterial der Signierelemente muss sich bei der zuletzt genannten Anwendung beim Verarbeitungsprozess auflösen. Die verschiedenen Kunststoffmaterialien haben jedoch einen unterschiedlichen Verarbeitungsschwund, das heißt, die fertigen Signierelement-Spritzgussteile besitzen voneinander abweichende Abmessungen, beispielsweise schrumpft Polyacetal um ca. 2,3 %. Bei Verwendung desselben Hammerkopfes 14 tritt dann der in Fig. 4 dargestellte Zustand auf, das heißt, die Abnahmehaken 12 müssen sich beim Aufstecken auf den Hammerkopf 14 wesentlich stärker nach außen biegen und besitzen auch im eingerasteten Zustand immer noch einen von 90° abweichenden Winkel, beispielsweise einen Winkel von 80°. Dies führt dazu, dass zum einen eine hohe Kraft beim Aufstecken erforderlich ist und zum anderen die Abnahmehaken 12 infolge der auftretenden Kerbspannung abbrechen können. Sie fallen dadurch vom Hammerkopf 14 ab, wodurch das Einschlagen in ein Holz nicht mehr möglich ist. Darüber hinaus kann ein Splittern beim Brechen der Abnahmehaken zu einer Personengefährdung führen. Weiterhin ist die Entnahme derartiger Signierelemente 10 aus einem Magazin in der oben beschriebenen Weise kaum möglich.

Das in den Fig. 4 bis 7 als Ausführungsbeispiel der Erfindung dargestellte Signierelement 20 weist viele Übereinstimmungen mit dem Signierelement 10 auf, so dass gleiche oder gleichwirkende Elemente mit denselben Bezugszeichen versehen und nicht nochmals beschrieben sind. Im Unterschied zum Signierelement 10 weist der Signierkörper 21 des Signierelements 20 an jedem Eckbereich einen Schlitz 22 auf, der neben dem jeweiligen Abnahmehaken 12 von den schmaleren Stirnseiten ausgeht und sich in den Signierkörper 21 ungefähr parallel zu den Längsseiten hineinerstreckt. Hierdurch bilden sich flexible, federzungenartige Bereiche 23 aus, deren freie Endbereiche die Abnahmehaken 12 tragen. Die federzungenartigen Bereiche 23 liegen im unbelasteten Zustand in der Ebene des Signierkörpers 21, aus dem sie auch geformt sind, und bilden mit den Abnahmehaken 12 eine L-förmige Anordnung. Beim Aufstecken auf den Hammerkopf 14 biegt sich diese L-förmige Anordnung im Wesentlichen um die in den Fig. 5 und 6 dargestellte Biegelinie 24 nach außen, die im Übergangsbereich zwischen dem federzungenartigen Bereich 23 und dem übrigen Bereich des Signierkörpers 21 verläuft. Dies bedeutet, dass die Biegebelastung und damit Kerbspannungsbelastung vom Fußpunkt bzw. Ansatzpunkt der Abnahmehaken 12 am Signierkörper 21 weitgehend weggenommen und zur Biegelinie 24 hin verschoben wird, so dass nunmehr der federzungenartige Bereich 23 eine kontinuierliche Verformung erfährt. Auch bei "zu kleinen" Signierelementen 20 gemäß Fig. 7 bleibt ein Winkel von im Wesentlichen 90° zwischen den Abnahmehaken 12 und den federzungenartigen Bereichen 23 erhalten. Im Bereich der Biegelinien der federzungenartigen Bereiche 23 treten wesentlich geringere Biegespannungen im Vergleich zu den herkömmlichen Signierelementen 10 auf.

Die im Ausführungsbeispiel dargestellten Schlitze 22 verlaufen im Wesentlichen parallel zu den Längsseiten des Signierkörpers 21. Sie können prinzipiell auch schräg verlaufen, so dass sich die Breite der federzungenartigen Bereiche 23 über deren Länge vergrößert oder verkleinert. Die Schlitze 22 können auch keilförmig ausgestaltet sein, um die Biegelinie zu optimieren.

In weiteren, nicht dargestellten Ausführungsvarianten können auch jeweils zwei Schlitze einen federzungenartigen Bereich 23 begrenzen. Diese Schlitze verlaufen dabei beispielsweise zur Mitte des Signierkörpers 21 hin. Im Übrigen sind auch runde, quadratische oder andere Formen von Signierkörpern möglich. Die Erfindung lässt sich auch auf alle bekannten Varianten von Signierelementen anwenden, beispielsweise die im eingangs genannten Stand der Technik dargestellten Signierelemente. Wesentlich ist dabei jeweils, dass die durch einen oder zwei Schlitze gebildeten federzungenartigen Bereiche bezüglich ihrer Länge und Breite so ausgebildet sind, dass durch leichte Verformbarkeit derselben Signierelemente mit voneinander abweichender Größe leicht auf einen Hammerkopf 14 aufgesteckt werden können.

Eine weitere, nicht dargestellte Ausführungsvariante kann darin bestehen, dass federzungenartige Bereiche an der Umfangslinie von Signierkörpern angeformt sind. Beispielsweise genügen bei runden Signierkörpern dann drei federzungenartigen Bereiche.

## Patentansprüche

1. Signierelement zum Kennzeichnen von Holz, insbesondere von Baumstämmen, mit einem plättchenartigen, eine Signatur aufweisenden Signierkörper (21), von dessen einer Flachseite Abnahmehaken (12) zum Einrasten in umfangsseitige Einformungen (16) des Hammerkopfes (14) eines Einschlaghammers (15) zum Einschlagen des Signierelements (20) in Holz hochstehen, und dessen andere Flachseite mit im Holz fixierbaren Einschlagelementen (18) versehen ist, **dadurch gekennzeichnet, dass** die Abnahmehaken (12) an federzungenartigen Bereichen (23) des plättchenartigen Signierkörpers (21) angeordnet sind, die jeweils durch wenigstens einen vom Randbereich des Signierkörpers (21) aus nach innen verlaufenden Schlitz (22) gebildet sind.

2. Signierelement nach Anspruch 1, weiter **dadurch gekennzeichnet, dass** die Abnahmehaken (12) an den vier Eckbereichen des rechteckförmigen Signierkörpers (21) angeordnet sind.

3. Signierelement nach Anspruch 1 oder 2, weiter **dadurch gekennzeichnet, dass** die federzungenartigen Bereiche im Wesentlichen rechtwinklig zu den hochstehenden Abnahmehaken (12) angeordnet sind.

4. Signierelement nach einem der vorhergehenden Ansprüche, weiter **dadurch gekennzeichnet, dass** die federzungenartigen Bereiche (23) mit den übrigen Bereichen des Signierkörpers (21) im unbelasteten Zustand eine Ebene bilden.

5. Signierelement nach einem der vorhergehenden Ansprüche, weiter **dadurch gekennzeichnet, dass** jeder federzungenartige Bereich (23) durch einen parallel oder beabstandet schräg zur Längsseite des Signierkörpers (21) verlaufenden Schlitz (22) begrenzt ist, der von einer Stirnseite des Signierkörpers (21) ausgeht.

6. Signierelement nach einem der vorhergehenden Ansprüche, weiter **dadurch gekennzeichnet, dass** der Signierkörper (21) zusammen mit den Einschlagelementen (15) und/oder den mit Abnahmehaken (12) versehenen federzungenartigen Bereichen (23) einstückig ausgebildet ist.

7. Signierelement nach einem der vorhergehenden Ansprüche, weiter **dadurch gekennzeichnet, dass** es aus Kunststoff besteht, insbesondere aus Polyamid (PA), Polykarbonat (PC) oder Polyacetal (POM).

## Claims

1. Marking element for the marking of wood, in particular tree trunks, having a platelet-like marking body (21) with a symbol and from one flat side of which receiving hooks (12) extend upwards to engage in peripheral-side indentations (16) of the hammer head (14) of a hammer (15) for striking the marking element (20) into the wood, while the other flat side is provided with striking elements (18) which can be fixed in the wood, **characterised in that** the receiving hooks (12) are arranged on flexible-tongue-like sections (23) of the platelet-like marking body (21), each formed by one or more slots (22) running inwards from the edge area of the marking body (21).

2. Marking element according to claim 1, further **characterised in that** the receiving hooks (12) are located on the four corner areas of the rectangular marking body (21).

3. Marking element according to claim 1 or 2, further **characterised in that** the flexible-tongue-like sections are arranged substantially at right-angles to the upwards-extending receiving hooks (12).

4. Marking element according to any of the preceding claims, further **characterised in that**, in the unloaded state, the flexible-tongue-like sections (23) form a plane with the other sections of the marking body (21).

5. Marking element according to any of the preceding claims, further **characterised in that** each flexible-tongue-like section (23) is bounded by a slot (22) which starts from one end face of the marking body (21) and runs parallel to or obliquely with clearance from the long side of the marking body (21).

6. Marking element according to any of the preceding claims, further **characterised in that** the marking body (21) is made in one piece together with the striking elements (15) and/or the flexible-tongue-like sections (23) provided with receiving hooks (12).

7. Marking element according to any of the preceding claims, further **characterised in that** it is made of plastic, in particular of polyamide (PA), polycarbonate (PC) or polyacetal (POM).

## Revendications

1. Elément de marquage pour l'identification du bois, en particulier de troncs d'arbres, avec un corps de marquage (21) de type plaquette présentant une signature, qui présente sur son premier côté plat des crochets de réception (12) en saillie en vue d'enclencher dans des moulages périphériques (16) de la tête de marteau (14) d'un marteau d'enfoncement (15) en vue d'enfoncer l'élément de marquage (20) dans du bois, et dont l'autre côté plat est muni d'éléments d'enfoncement (18) fixables dans le bois, **caractérisé en ce que** les crochets de réception (12) sont disposés sur des zones de type lames flexibles (23) du corps de marquage (21) de type plaquette qui sont formées à chaque fois par au moins une entaille (22) évoluant depuis la zone périphérique du corps de marquage (21) vers l'intérieur.

2. Elément de marquage selon la revendication 1, **caractérisé en outre en ce que** les crochets de réception (12) sont disposés sur les quatre zones d'angle du corps de marquage (21) de forme rectangulaire.

3. Elément de marquage selon la revendication 1 ou 2, **caractérisé en outre en ce que** les zones de type lames flexibles sont disposées pour l'essentiel perpendiculairement aux crochets de réception (12) en saillie.

4. Elément de marquage selon l'une quelconque des revendications précédentes, **caractérisé en outre en ce que** les zones de type lames flexibles (23) forment un plan avec le reste des zones du corps de marquage (21) à l'état non chargé.

5. Elément de marquage selon l'une quelconque des revendications précédentes, **caractérisé en outre en ce que** chaque zone de type lames flexibles (23) est limitée par une entaille (22) évoluant parallèlement ou espacée obliquement par rapport au côté longitudinal du corps de marquage (21), ladite entaille partant d'un front du corps de marquage (21).

6. Elément de marquage selon l'une quelconque des revendications précédentes, **caractérisé en outre en ce que** le corps de marquage (21) est réalisé d'une seule pièce conjointement avec les éléments d'enfoncement (15) et/ou les zones de type lames flexibles (23) munies de crochets de réception (12).

7. Elément de marquage selon l'une quelconque des revendications précédentes, **caractérisé en outre en ce qu'**il se compose de plastique, en particulier de polyamide (PA), de polycarbonate (PC) ou de polyacétal (POM).
